# FASCICULE DE BREVET EUROPEEN

(11) **EP 1 524 833 B1**
(45) Date de publication et mention de la délivrance du brevet: **17.06.2009**
(21) Numéro de dépôt: 03292537.2
(22) Date de dépôt: 13.10.2003
(51) Int. Cl.: H04M 3/533, H04W 4/00, B60R 11/02

(54) **Procédé de sécurisation circonstancielle d'une communication téléphonique, installation pour sa mise en oeuvre, et kit mains libres adapté au procédé**
Verfahren, System und Freisprecheinrichtungskit zum situationsabhängigen Beantworten von Anrufen
Method, handsfree kit and system allowing to answer calls securely based upon the situation

(43) Date de publication de la demande: 20.04.2005
(73) Titulaire: FRANCE TELECOM, 75015 Paris (FR)
(72) Inventeur: Hily, Serge, 14400 Bayeux (FR); Ollivier, Jean-Luc, 14280 Authie (FR); Tourolle, Michel, 14000 Caen (FR)
(74) Mandataire: Joly, Jean-Jacques

(56) Documents cités:
- WO-A-99/13668
- US-A1- 2002 177 928

## Description

L'invention concerne, à la fois, le domaine des télécommunications et celui de la sécurité routière.

Plus précisément, l'invention concerne, selon un premier de ses aspects, un procédé de sécurisation circonstancielle d'une communication téléphonique à établir, dans un réseau téléphonique, entre un appelant émetteur d'un appel téléphonique à partir d'un poste d'appel et un conducteur de véhicule appelé sur un poste destinataire mobile doté d'un kit mains libres.

De nombreuses études statistiques démontrent que l'attention que requiert la conduite d'un véhicule est incompatible avec la disponibilité requise pour poursuivre une conversation téléphonique avec un correspondant, l'usage du téléphone au volant augmentant les risques d'accidents par un facteur considérable, même en cas d'utilisation d'un kit mains libres.

Plusieurs solutions ont déjà été proposées pour remédier à cette aggravation de risques.

Par exemple, le document de brevet FR 2 806 245 décrit un dispositif visant à empêcher l'usage d'un appareil de communication sans fil ou à dissuader une personne de faire usage d'un tel appareil pendant la conduite d'un véhicule. Trois exemples de modes de fonctionnement sont décrits: le brouillage des communications établies avec l'appareil de communication sans fil, la coupure automatique de la liaison radio entre l'appareil de communication sans fil et son relais, et la déconnexion automatique du micro et/ou du haut-parleur de l'appareil de communication sans fil.

Cependant, les solutions préconisées dans ce document antérieur ne règlent pas véritablement le problème de la sécurité de l'usage du téléphone au volant dans la mesure où les trois modes de fonctionnement décrits ont une action limitée au poste de conduite, et où il suffit donc de poser le téléphone sur le siège du passager avant pour que les appels entrants puissent toujours être reçus.

Une autre solution a été proposée à l'issue d'une étude menée, de décembre 1997 à juillet 2000, par l'INRETS en collaboration avec Renault, Fiat, Lernout & Hauspie, AKG, Metravib, et UTL, dans le cadre du projet européen CEMVOCAS, projet dont l'acronyme dérive de sa définition en langue anglaise : "CEntralised Management of VOCal interfaces aiming at a better Automotive Safety", c'est-à-dire "gestion centralisée d'interfaces vocales visant à l'amélioration de la sécurité automobile".

Cette étude a conduit à la réalisation d'un prototype testé en conditions réelles, et permettant la détermination de trois niveaux de disponibilité d'un automobiliste en situation de conduite lors de la réception d'un appel entrant (Vert : disponible; Orange : peu disponible; Rouge : indisponible) grâce à une batterie de capteurs (vitesse du véhicule, action sur le volant, action sur les pédales, et optionnellement position GPS du véhicule) associés à une unité de reconnaissance de situations de conduite, et complétés par un assistant téléphonique personnel chargé de répondre à l'appelant en fonction du résultat.

Malgré l'intérêt théorique reconnu au projet CEMVOCAS, la mise en oeuvre de ce projet, qui requiert de nombreux capteurs, est d'une grande complexité et nécessite le recours à un outil de reconnaissance de conditions de conduite particulièrement puissant, constitué de réseaux neuronaux.

Une autre solution est également proposée par la demande de brevet WO 99/13668 intitulée « Procédé et dispositif de commande d'une unité de téléphonie mise en place dans un véhicule automobile ». Ce document décrit un dispositif visant à empêcher une prise de ligne téléphonique trop rapide de la part du conducteur d'un véhicule automobile, et cherche notamment à isoler le conducteur du monde extérieur tant que les conditions optimales de prise de ligne ne sont pas atteintes. Pour cela, le dispositif déclenche une mise en condition sécuritaire lorsque le véhicule est actif, à savoir, lorsqu'il se déplace, lorsqu'il est à l'arrêt mais moteur tournant ou après contact.
Cependant, cette solution requiert également de nombreux capteurs, tels que des capteurs pour détecter la rotation des roues ou des capteurs d'arbre à came, et vise simplement à différer la prise d'un appel téléphonique par le conducteur.

Dans ce contexte, l'invention a pour but de proposer un procédé et une installation de sécurisation circonstancielle de communications téléphoniques présentant un rapport efficacité / complexité sensiblement supérieur à celui qu'offrent les techniques connues à ce jour.

A cette fin, le procédé de l'invention, par ailleurs conforme à la définition générique qu'en donne le préambule ci-dessus, est essentiellement caractérisé en ce qu'il comprend les opérations consistant à : déclencher automatiquement un mode de sécurité en réponse à une mise en service du kit mains libres; détecter et intercepter automatiquement, en cas de mode de sécurité déclenché, l'appel téléphonique émis à partir du poste d'appel à destination du poste destinataire mobile; émettre automatiquement, à destination du poste d'appel, un message d'information signalant l'état déclenché du mode de sécurité; enregistrer, au moins sur commande, un message d'appel éventuellement formulé par l'appelant à destination du poste destinataire mobile; adresser automatiquement au poste destinataire mobile, au moins en cas d'enregistrement d'un message d'appel, un premier message de renseignement signalant la possibilité d'écouter le message d'appel enregistré; et restituer à destination du poste destinataire mobile, au moins sur commande, le message d'appel préalablement enregistré émanant de l'appelant.

De préférence, le procédé de l'invention comprend en outre une opération consistant à différer sur commande la restitution du message d'appel à destination du poste destinataire mobile.

Avantageusement, ce procédé comprend également les opérations consistant à : enregistrer, au moins sur commande, un message de réponse éventuellement formulé par le conducteur appelé à destination du poste d'appel; adresser automatiquement au poste d'appel, au moins en cas d'enregistrement d'un message de réponse, un second message de renseignement signalant la possibilité d'écouter le message de réponse enregistré; et restituer à destination du poste d'appel, au moins sur commande, le message de réponse préalablement enregistré émanant du conducteur appelé.

Le procédé peut aussi comprendre une opération consistant à différer sur commande l'enregistrement du message de réponse formulé par le conducteur appelé à destination du poste d'appel.

L'une au moins, ou chacune, des commandes est avantageusement constituée par une commande vocale, ce procédé comprenant une opération de reconnaissance vocale mise en oeuvre pour interpréter chaque commande vocale.

L'invention concerne également une installation pour la mise en oeuvre du procédé précédemment défini, cette installation étant caractérisée en ce qu'elle comprend, au sein d'un réseau téléphonique, un terminal téléphonique mobile constituant le poste destinataire et incluant un module de transmission, un kit mains libres pour le terminal mobile, un commutateur, un enregistreur de localisation nominale, un assistant téléphonique personnel doté au moins d'une fonction d'enregistrement et d'une fonction de reproduction, des moyens de détection d'une mise en fonctionnement du kit mains libres, déclenchant sélectivement l'émission, à la mise en fonctionnement du kit mains libres, d'une consigne de mise en sécurité du terminal mobile émise par le module de transmission à destination du commutateur, et des moyens de requête de redirection assurant sélectivement la transmission, à partir du commutateur vers l'enregistreur de localisation nominale, d'une requête de redirection pour rediriger vers l'assistant téléphonique personnel tout éventuel appel émis vers le terminal mobile.

Selon un mode de réalisation avancé de l'invention, l'assistant téléphonique personnel peut être physiquement implanté dans le kit mains libres et / ou être doté d'une fonction de reconnaissance vocale.

L'invention concerne enfin un kit mains libres destiné à la sécurisation circonstancielle d'une communication téléphonique à établir, dans un réseau téléphonique, entre un appelant émetteur d'un appel téléphonique à partir d'un poste d'appel et un conducteur de véhicule appelé sur un poste destinataire mobile doté de ce kit mains libres, ce kit étant caractérisé en ce qu'il inclut un assistant téléphonique personnel doté au moins d'une fonction d'enregistrement et d'une fonction de reproduction.

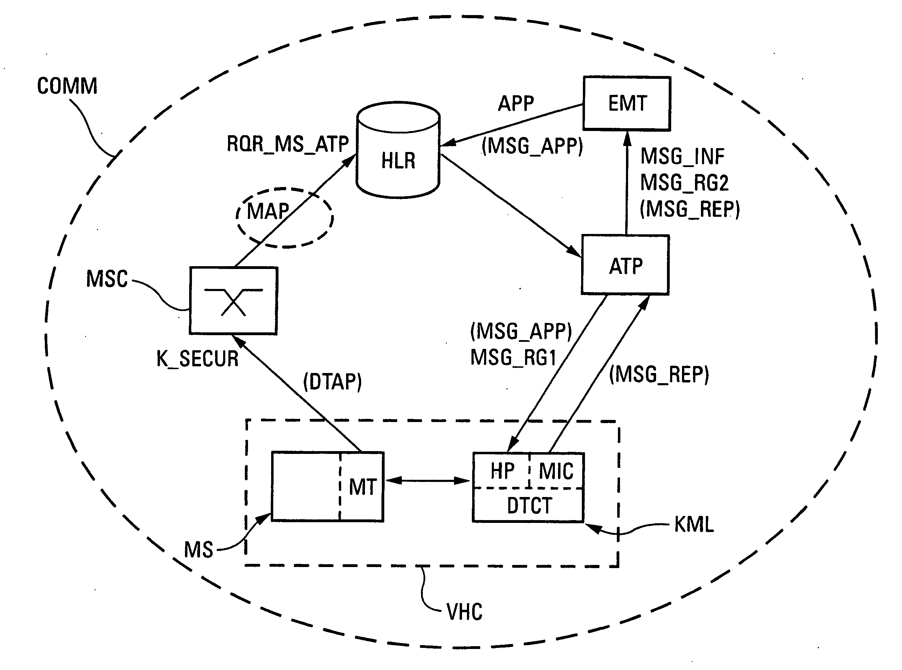

D'autres caractéristiques et avantages de l'invention ressortiront clairement de la description qui en est faite ci-après, à titre indicatif et nullement limitatif, en référence à l'unique figure annexée, qui représente schématiquement les différentes entités impliquées dans la mise en oeuvre du procédé de l'invention.

Comme annoncé précédemment, l'invention concerne un procédé pour augmenter le niveau de sécurité associé à une communication téléphonique, dans la circonstance particulière où cette communication résulte d'un appel à destination du conducteur d'un véhicule VHC.

Plus particulièrement, l'invention vise à sécuriser les circonstances dans lesquelles se déroule une communication téléphonique qui doit s'établir, dans un réseau téléphonique COMM, entre un appelant, qui émet un appel téléphonique APP à partir d'un poste d'appel EMT, et le conducteur du véhicule VHC, qui est appelé sur un poste destinataire mobile MS doté d'un kit mains libres KML.

L'idée centrale de l'invention consiste à mettre en oeuvre tous les moyens techniques qui, d'une part, permettent au conducteur de garder la totale maîtrise de la transaction téléphonique, notamment en termes de choix de ses instants de locution, et qui, d'autre part, lui interdisent une discussion interactive directe avec l'appelant.

Outre le terminal téléphonique mobile MS, qui constitue le poste destinataire et qui inclut classiquement un module de transmission MT, et outre le kit mains libres KML, avec lequel ce terminal mobile MS coopère, l'installation prévue pour la mise en oeuvre du procédé de l'invention forme un sous-ensemble d'un réseau téléphonique COMM qui comprend notamment (figure) un commutateur fixe MSC, un enregistreur de localisation nominale HLR, et un assistant téléphonique personnel ATP.

Le kit mains libres KML comprend un haut-parleur HP, un micro MIC, et des moyens de détection DTCT de sa mise en fonctionnement.

L'assistant téléphonique personnel ATP, qui peut soit être lui aussi physiquement implanté dans le kit mains libres KML, soit appartenir à l'infra-structure générale du réseau téléphonique COMM, est doté d'une fonction d'enregistrement, d'une fonction de reproduction, et, de préférence, d'une fonction de reconnaissance vocale.

Une interface MAP, constituée par un protocole d'application, permet une transmission de requêtes de ré-adressage depuis le commutateur MSC vers l'enregistreur de localisation nominale HLR.

Le procédé par lequel cette installation est mise en oeuvre est le suivant.

Lorsque le conducteur du véhicule VHC met en fonctionnement le kit mains libres KML, soit en posant son terminal mobile MS, par exemple du type GSM, GPRS ou UMTS, sur ce kit, soit en laissant s'établir un lien de type Bluetooth entre son terminal mobile MS et ce kit, les moyens de détection DTCT déclenchent l'émission, par le module de transmission MT et à destination du commutateur MSC, d'une consigne K_SECUR de mise en sécurité du terminal mobile MS, cette consigne étant émise suivant le protocole de transfert direct DTAP.

Le commutateur MSC adresse à son tour à l'enregistreur de localisation nominale HLR via l'interface MAP du réseau COMM, une requête de redirection RQR_MS_ATP, pour rediriger vers l'assistant téléphonique personnel ATP tout éventuel appel émis vers le terminal mobile MS.

Une fois le mode de sécurité ainsi déclenché, tout appel téléphonique APP émis à partir d'un poste d'appel EMT quelconque à destination du poste destinataire MS est détecté, intercepté et ré-adressé automatiquement vers l'assistant personnel ATP.

L'assistant ATP émet alors automatiquement, à destination du poste d'appel EMT, un message d'information MSG_INF signalant à l'appelant que le mode de sécurité du terminal MS a été déclenché, et l'invitant à laisser un message d'appel à destination de ce poste destinataire MS.

S'il le souhaite, l'appelant donne à l'assistant ATP l'ordre d'enregistrer le message d'appel MSG_APP qu'il formule, l'ordre étant donné par actionnement d'une touche, ou par commande vocale si l'assistant ATP est doté d'une fonction de reconnaissance vocale.

Dans le cas où un message d'appel MSG_APP a été enregistré, l'assistant ATP adresse automatiquement au poste destinataire MS un premier message de renseignement MSG_RG1 signalant au conducteur qu'il a la possibilité d'écouter, immédiatement ou ultérieurement, le message d'appel MSG_APP laissé par l'appelant et préalablement enregistré.

S'il le souhaite et quand il le souhaite, le conducteur donne à l'assistant ATP l'ordre de restituer sur le poste destinataire MS le message d'appel MSG_APP préalablement enregistré, l'ordre étant très préférablement donné par commande vocale, et étant exécuté en retour par l'assistant ATP.

Ce procédé peut être complété par des opérations permettant un retour d'information vers l'appelant.

Dans ce cas, l'assistant ATP invite le conducteur à laisser, immédiatement ou ultérieurement, un message de réponse à destination de l'appelant.

S'il le souhaite et quand il le souhaite, le conducteur donne alors à l'assistant ATP l'ordre d'enregistrer le message de réponse MSG_REP qu'il formule, l'ordre étant très préférablement donné par commande vocale.

Dans le cas où un message de réponse MSG_REP a été enregistré, l'assistant ATP adresse automatiquement au poste d'appel EMT un second message de renseignement MSG_RG2 signalant à l'appelant qu'il a la possibilité d'écouter le message de MSG_REP laissé par le conducteur et préalablement enregistré.

S'il le souhaite, l'appelant donne à l'assistant ATP l'ordre de restituer sur le poste d'appel EMT le message de réponse MSG_REP préalablement enregistré, l'ordre étant donné par actionnement d'une touche ou par commande vocale.

Un exemple concret permettra de mieux comprendre le déroulement des opérations précédemment décrites.

On suppose que Monsieur X, automobiliste, est le légitime propriétaire du terminal mobile MS et du kit mains libres KML connus du réseau COMM pour permettre la gestion sécurisée des communications reçues de Monsieur X dans son véhicule VHC.

Après être entré dans son véhicule, Monsieur X place son terminal mobile MS sur le kit mains libres KML, ou en liaison Bluetooth avec lui.

Le mode de sécurité est alors automatiquement enclenché, ce qui empêche Monsieur X d'appeler directement un quelconque correspondant, et désigne l'assistant personnel ATP comme destinataire de tous les appels adressés à Monsieur X.

En cas d'appel à destination de Monsieur X, l'assistant ATP adresse à l'appelant un message d'information MSG_INF tel que : "Bonjour, ici le Service Sécurité Véhicule. Nous vous informons que Monsieur X est actuellement dans sa voiture et ne peut répondre à votre appel. Si vous souhaitez laisser un message, qui sera transmis immédiatement à Monsieur X, dites "Message"".

Si le numéro de l'appelant n'est pas reconnu par l'assistant ATP pour une raison quelconque, par exemple parce qu'il est sur liste rouge, l'assistant ATP demande à l'appelant soit de le saisir au clavier, soit de le prononcer distinctement si l'assistant est doté d'une fonction de reconnaissance vocale.

Dès que le numéro de l'appelant est connu de l'assistant ATP, le processus peut se poursuivre.

L'appelant peut alors prononcer la commande vocale "Message", à laquelle l'assistant ATP peut réagir par une invitation telle que : "Vous pouvez maintenant dicter votre message".

L'appelant répond à l'invitation de l'assistant ATP en laissant un message d'appel MSG_APP tel que : "Bonsoir, papa, c'est Marie : avant de rentrer à la maison, pourrais-tu passer par la pharmacie m'acheter des pastilles contre la toux ?".

Puis l'appelant raccroche son téléphone EMT après avoir reçu de l'assistant ATP une invitation à le faire, telle que : "Nous informons Monsieur X de votre appel. Vous pouvez maintenant raccrocher".

Le kit KML de Monsieur X étant en mode sécurité, un signal sonore non agressif est alors émis dans le véhicule VHC, soit à distance par l'assistant ATP, soit localement par le kit KML.

Ce signal sonore annonce le message de renseignement MSG_RG1 émis par l'assistant ATP à l'adresse de Monsieur X, tel que : "Monsieur X, nous vous informons que vous venez de recevoir un message de Mademoiselle X. Vous pouvez l'écouter si vous le désirez, et au moment de votre choix. Si vous souhaitez l'écouter maintenant, dites "maintenant". Si vous souhaitez l'écouter plus tard, indiquez en minutes le délai au bout duquel vous souhaitez être relancé, par exemple "dix minutes"".

Si le conducteur appelé souhaite effectivement écouter le message sans délai, il répond à l'invitation de l'assistant ATP par la commande vocale : "Maintenant", qui déclenche la restitution, par l'assistant ATP, du message d'appel MSG_APP : "Bonsoir, papa, c'est Marie : avant de rentrer à la maison, pourrais-tu passer par la pharmacie m'acheter des pastilles contre la toux ?".

Si le conducteur appelé souhaite différer de par exemple cinq minutes l'écoute du message, il répond à l'invitation de l'assistant ATP par la commande vocale : "Cinq minutes", qui déclenche le décompte, par l'assistant ATP, d'un délai de cinq minutes au bout duquel cet assistant offre à nouveau à Monsieur X la possibilité d'écouter, ou non, le message d'appel MSG_APP, avec restitution immédiate ou différée.

La restitution du message d'appel MSG_APP par l'assistant personnel ATP est suivie d'une invitation faite au conducteur de laisser un message de réponse à destination de l'appelant, par exemple sous la forme : "Vous pouvez répondre si vous le désirez, et au moment de votre choix. Si vous souhaitez répondre maintenant, dites "maintenant". Si vous souhaitez répondre plus tard, indiquez en minutes le délai au bout duquel vous souhaitez être relancé, par exemple "dix minutes"".

Le conducteur peut alors prononcer la commande vocale "Maintenant", à laquelle l'assistant ATP peut réagir par une invitation telle que : "Merci de dicter votre réponse".

Le conducteur répond à l'invitation de l'assistant ATP en laissant un message de réponse MSG_REP tel que : "Ne t'inquiète pas, ma petite Marie : j'arrive justement à la pharmacie et je serai à la maison d'ici un quart d'heure".

Puis l'assistant ATP, détectant le silence prolongé qui suit la fin du message de réponse, adresse au conducteur un message d'information tel que : "Nous transmettons immédiatement votre réponse à Mademoiselle X".

L'assistant ATP adresse alors automatiquement au poste d'appel EMT un second message de renseignement MSG_RG2 qui, soit signale à Mademoiselle X qu'elle a la possibilité d'écouter le message de MSG_REP laissé et préalablement enregistré par Monsieur X, soit restitue directement ce message.

Dans le premier cas, l'appelant, s'il le souhaite, donne à l'assistant ATP l'ordre de restituer sur le poste d'appel EMT le message de réponse MSG_REP préalablement enregistré, l'ordre étant donné par actionnement d'une touche ou par commande vocale.

Qu'elle soit automatique, ou qu'elle soit conditionnée à l'accord de Mademoiselle X, la restitution du message de réponse MSG_REP par l'assistant ATP permet à Mademoiselle X d'entendre la réponse rassurante de son père : "Ne t'inquiète pas, ma petite Marie : j'arrive justement à la pharmacie et je serai à la maison d'ici un quart d'heure".

## Revendications

1. Procédé apte à sécuriser une communication téléphonique à établir, dans un réseau téléphonique (COMM), entre un appelant émetteur d'un appel téléphonique (APP) à partir d'un poste d'appel (EMT) et un conducteur de véhicule appelé sur un poste destinataire mobile (MS) doté d'un kit mains libres (KML), comprenant les opérations consistant à : déclencher automatiquement un mode de sécurité (K_SECUR) en réponse à une mise en service du kit mains libres (KML); détecter et intercepter automatiquement, en cas de mode de sécurité déclenché, l'appel téléphonique (APP) émis à partir du poste d'appel (EMT) à destination du poste destinataire mobile (MS); et émettre automatiquement, à destination du poste d'appel (EMT), un message d'information (MSG_INF) signalant l'état déclenché du mode de sécurité;
**caractérisé en ce qu'**il comprend également les opérations consistant à : enregistrer, au moins sur commande, un message d'appel (MSG_APP) éventuellement formulé par l'appelant à destination du poste destinataire mobile (MS); adresser automatiquement au poste destinataire mobile (MS), au moins en cas d'enregistrement d'un message d'appel (MSG_APP), un premier message (MSG_RG1) de renseignement signalant la possibilité d'écouter le message d'appel (MSG_APP) enregistré; et restituer à destination du poste destinataire mobile (MS), au moins sur commande, le message d'appel (MSG_APP) préalablement enregistré émanant de l'appelant.

2. Procédé suivant la revendication 1, **caractérisé en ce qu'**il comprend en outre une opération consistant à différer sur commande la restitution du message d'appel (MSG_APP) à destination du poste destinataire mobile (MS).

3. Procédé suivant la revendication 1 ou 2, **caractérisé en ce qu'**il comprend en outre les opérations consistant à : enregistrer, au moins sur commande, un message de réponse (MSG_REP) éventuellement formulé par le conducteur appelé à destination du poste d'appel (EMT); adresser automatiquement au poste d'appel (EMT), au moins en cas d'enregistrement d'un message de réponse (MSG_REP), un second message (MSG_RG2) de renseignement signalant la possibilité d'écouter le message de réponse (MSG_REP) enregistré; et restituer à destination du poste d'appel (EMT), au moins sur commande, le message de réponse (MSG_REP) préalablement enregistré émanant du conducteur appelé.

4. Procédé suivant la revendication 3, **caractérisé en ce qu'**il comprend en outre une opération consistant à différer sur commande l'enregistrement du message de réponse (MSG_REP) formulé par le conducteur appelé à destination du poste d'appel (EMT).

5. Procédé suivant l'une quelconque des revendications précédentes, **caractérisé en ce que** l'une au moins des commandes est constituée par une commande vocale, ce procédé comprenant au moins une opération de reconnaissance vocale mise en oeuvre pour interpréter chaque commande vocale.

6. Installation pour la mise en oeuvre du procédé suivant l'une quelconque des revendications précédentes, comprenant, au sein d'un réseau téléphonique (COMM), un terminal téléphonique mobile (MS) constituant le poste destinataire et incluant un module de transmission (MT), et un kit mains libres (KML) pour le terminal mobile (MS),
**caractérisé en ce qu'**elle comprend également un commutateur (MSC), un enregistreur de localisation nominale (HLR), un assistant téléphonique personnel (ATP) doté au moins d'une fonction d'enregistrement et d'une fonction de reproduction, des moyens de détection (DTCT) d'une mise en fonctionnement du kit mains libres (KML), déclenchant sélectivement l'émission, à la mise en fonctionnement du kit mains libres, d'une consigne (K_SECUR) de mise en sécurité du terminal mobile (MS) émise par le module de transmission (MT) à destination du commutateur (MSC), et des moyens (MAP) de requête de redirection assurant sélectivement la transmission, à partir du commutateur (MSC) vers l'enregistreur de localisation nominale (HLR), d'une requête de redirection (RQR_MS_ATP) pour rediriger vers l'assistant téléphonique personnel (ATP) tout éventuel appel émis vers le terminal mobile (MS).

7. Installation suivant la revendication 6, **caractérisée en ce que** l'assistant téléphonique personnel (ATP) est physiquement implanté dans le kit mains libres (KML).

8. Installation suivant l'une quelconque des revendications 6 et 7, **caractérisée en ce que** l'assistant téléphonique personnel (ATP) est en outre doté d'une fonction de reconnaissance vocale.

9. Kit mains libres (KML) apte à sécuriser une communication téléphonique à établir, dans un réseau téléphonique (COMM), entre un appelant émetteur d'un appel téléphonique (APP) à partir d'un poste d'appel (EMT) et un conducteur de véhicule appelé sur un poste destinataire mobile (MS) doté de ce kit mains libres (KML), **caractérisé en ce qu'**il inclut un assistant téléphonique personnel (ATP) comprenant au moins :
- une fonction d'enregistrement, au moins sur commande d'un message d'appel (MSG_APP) éventuellement formulé par l'appelant à destination du poste destinataire mobile (MS) ;
- une fonction d'adressage automatique au poste destinataire mobile (MS) au moins en cas d'enregistrement d'un message d'appel (MSG_APP) d'un premier message de renseignement (MSG_RG1) signalant la possibilité d'écouter le message d'appel (MSG_APP) enregistré :
- une fonction de restitution à destination du poste destinataire mobile (MS), au moins sur commande, du message d'appel (MSG_APP) préalablement enregistré émanant de l'appelant :
- une fonction d'enregistrement, au moins sur commande d'un message de réponse (MSG_REP) formulé par le conducteur à destination du poste d'appel (EMT) ;
- une fonction d'adressage automatique au poste d'appel (EMT) au moins en cas d'enregistrement d'un message de réponse (MSG_REP) d'un second message de renseignement (MSG_RG2) signalant à l'appelant la possibilité d'écouter le message de réponse (MSG_REP) enregistré ; et
- une fonction de restitution à destination du poste d'appel (EMT), au moins sur commande, du message de réponse (MSG_REP) préalablement enregistré émanant du conducteur.

## Claims

1. Method able to make safe a telephone communication which is to be established, in a telephone network (COMM), between a caller sending a telephone call (APP) from a call set (EMT) and a vehicle driver called on a destination mobile station (MS) equipped with a hands-free kit (KML), comprising the operations consisting in: automatically triggering a safety mode (K_SECUR) in response to an activation of the hands-free kit (KML); detecting and automatically intercepting, in case of triggered safety mode, the telephone call (APP) sent from the call set (EMT) addressed to the destination mobile station (MS); and automatically sending, addressed to the call set (EMT), an information message (MSG_INF) signalling the triggered state of the safety mode;
**characterized in that** it also comprises the operations consisting in: recording, at least on command, a call message (MSG_APP) optionally formulated by the caller addressed to the destination mobile station (MS); automatically addressing to the destination mobile station (MS), at least in case of recording a call message (MSG_APP), a first notification message (MSG_RG1) signalling the possibility of listening to the recorded call message (MSG_APP); and playing back to the destination mobile station (MS), at least on command, the previously recorded call message (MSG_APP) emanating from the caller.

2. Method in accordance with Claim 1, **characterized in that** it furthermore comprises an operation consisting in postponing on command the playback of the call message (MSG_APP) addressed to the destination mobile station (MS).

3. Method in accordance with Claim 1 or 2, **characterized in that** it furthermore comprises the operations consisting in: recording, at least on command, an answering message (MSG_REP) optionally formulated by the called driver addressed to the call set (EMT); automatically addressing to the call set (EMT), at least in case of recording an answering message (MSG_REP), a second notification message (MSG_RG2) signalling the possibility of listening to the recorded answering message (MSG_REP); and playing back to the call set (EMT), at least on command, the previously recorded answering message (MSG_REP) emanating from the called driver.

4. Method in accordance with Claim 3, **characterized in that** it furthermore comprises an operation consisting in postponing on command the recording of the answering message (MSG_REP) formulated by the called driver addressed to the call set (EMT).

5. Method in accordance with any one of the preceding claims, **characterized in that** one at least of the commands consists of a voice command, this method comprising at least one voice recognition operation implemented for interpreting each voice command.

6. Installation for implementing the method in accordance with any one of the preceding claims, comprising, within a telephone network (COMM), a mobile phone station (MS) constituting the destination set and including a transmission module (MT), and a hands-free kit (KML) for the mobile station (MS),
**characterized in that** it also comprises a switch (MSC), a home location register (HLR), a telephone personal assistant (ATP) equipped at least with a recording function and with a reproduction function, detection means (DTCT) for detecting an activation of the hands-free kit (KML), selectively triggering the sending, upon the hands-free kit's activation, of a cue (K_SECUR) placing the mobile station (MS) in safe mode, sent by the transmission module (MT) addressed to the switch (MSC), and redirection request means (MAP) selectively operating the transmission, from the switch (MSC) to the home location register (HLR), of a redirection request (RQR_MS_ATP) such as to redirect to the telephone personal assistant (ATP) any call that may have been sent to the mobile station (MS).

7. Installation in accordance with Claim 6, **characterized in that** the telephone personal assistant (ATP) is physically embedded in the hands-free kit (KML).

8. Installation in accordance with either one of Claims 6 and 7, **characterized in that** the telephone personal assistant (ATP) is furthermore equipped with a voice recognition function.

9. Hands-free kit (KML) able to make safe a telephone communication which is to be established, in a telephone network (COMM), between a caller sending a telephone call (APP) from a call set (EMT) and a vehicle driver called on a destination mobile station (MS) equipped with this hands-free kit (KML), **characterized in that** it includes a telephone personal assistant (ATP), comprising at least:
- a function for recording, at least on command, a call message (MSG_APP) optionally formulated by the caller addressed to the destination mobile station (MS);
- a function for automatically addressing to the destination mobile station (MS), at least in case of recording a call message (MSG_APP), a first notification message (MSG_RG1) signalling the possibility of listening to the recorded call message (MSG_APP);
- a function for playing back to the destination mobile station (MS), at least on command, the previously recorded call message (MSG_APP) emanating from the caller;
- a function for recording, at least on command, an answering message (MSG_REP) formulated by the driver, addressed to the call set (EMT);
- a function for automatically addressing to the call set (EMT), at least in case of recording an answering message (MSG_REP), a second notification message (MSG_RG2) signalling to the caller the possibility of listening to the recorded answering message (MSG_REP); and
- a function for playing back to the call set (EMT), at least on command, the previously recorded answering message (MSG_REP) emanating from the driver.

## Patentansprüche

1. Verfahren, das geeignet ist, eine in einem Telefonnetz (COMM) zwischen einem ausgehend von einem Anrufanschluss (EMT) einen Telefonanruf (APP) sendenden Anrufer und einem auf einem mit einer Freisprechanlage (KML) ausgestatteten mobilen Zielanschluss (MS) angerufenen Fahrzeugführer herzustellende Telefonverbindung zu sichern, das die Vorgänge enthält, die darin bestehen: als Reaktion auf eine Inbetriebnahme der Freisprechanlage (KML) automatisch einen Sicherheitsmodus (K_SECUR) auszulösen; im Fall eines ausgelösten Sicherheitsmodus den ausgehend vom Anrufanschluss (EMT) gesendeten und für den mobilen Zielanschluss (MS) bestimmten Telefonanruf (APP) automatisch zu erfassen und aufzufangen; und automatisch eine Informationsmitteilung (MSG_INF) an den Anrufanschluss (EMT) zu senden, die den ausgelösten Zustand des Sicherheitsmodus anzeigt; **dadurch gekennzeichnet, dass** es ebenfalls die Vorgänge enthält, die darin bestehen: zumindest auf eine Steuerung hin eine ggf. vom Anrufer formulierte, für den mobilen Zielanschluss (MS) bestimmte Anrufmitteilung (MSG_APP) aufzuzeichnen; zumindest im Fall des Aufzeichnens einer Anrufmitteilung (MSG_APP) automatisch eine erste Auskunftmitteilung (MSG_RG1) an den mobilen Zielanschluss (MS) zu übermitteln, die die Möglichkeit anzeigt, die aufgezeichnete Anrufmitteilung (MSG_APP) abzuhören; und für den mobilen Zielanschluss (MS) zumindest auf eine Steuerung hin die vorher aufgezeichnete, vom Anrufer kommende Anrufmitteilung (MSG_APP) wiederherzustellen.

2. Verfahren nach Anspruch 1, **dadurch gekennzeichnet, dass** es weiter einen Vorgang enthält, der darin besteht, auf eine Steuerung hin die Wiederherstellung der für den mobilen Zielanschluss (MS) bestimmten Anrufmitteilung (MSG_APP) zu verzögern.

3. Verfahren nach Anspruch 1 oder 2, **dadurch gekennzeichnet, dass** es außerdem die Vorgänge enthält, die darin bestehen: zumindest auf eine Steuerung hin eine ggf. vom angerufenen Fahrer formulierte und für den Anrufanschluss (EMT) bestimmte Antwortmitteilung (MSG_REP) aufzuzeichnen; an den Anrufanschluss (EMT) zumindest im Fall einer Aufzeichnung einer Antwortmitteilung (MSG_REP) automatisch eine zweite Auskunftmitteilung (MSG_RG2) zu übermitteln, die die Möglichkeit anzeigt, die aufgezeichnete Antwortmitteilung (MSG_REP) abzuhören; und für den Anrufanschluss (EMT) zumindest auf eine Steuerung hin die vom angerufenen Fahrer kommende, vorher aufgezeichnete Antwortmitteilung (MSG_REP) wiederherzustellen.

4. Verfahren nach Anspruch 3, **dadurch gekennzeichnet, dass** es außerdem einen Vorgang enthält, der darin besteht, auf eine Steuerung hin die Aufzeichnung der vom angerufenen Fahrer formulierten und für den Anrufanschluss (EMT) bestimmten Antwortmitteilung (MSG_REP) zu verzögern.

5. Verfahren nach einem der vorhergehenden Ansprüche,
**dadurch gekennzeichnet, dass** mindestens eine der Steuerungen aus einer Sprachsteuerung besteht, wobei dieses Verfahren mindestens einen Vorgang der Spracherkennung enthält, der angewendet wird, um jede Sprachsteuerung zu interpretieren.

6. Anlage zur Anwendung des Verfahrens nach einem der vorhergehenden Ansprüche, die innerhalb eines Telefonnetzwerks (COMM) eine mobile Telefonendeinrichtung (MS), die den Zielanschluss bildet und einen Übertragungsmodul (MT) umfasst, und eine Freisprechanlage (KML) für die mobile Endeinrichtung (MS) enthält,
**dadurch gekennzeichnet, dass** sie ebenfalls einen Schalter (MSC), ein Heimat-Ortsregister (HLR), einen persönlichen Telefonassistenten (ATP), der mit mindestens eine Aufzeichnungsfunktion und mit einer Wiedergabefunktion ausgestattet ist, Einrichtungen zur Erfassung (DTCT) einer Inbetriebsetzung der Freisprechanlage (KML), die selektiv das Senden, bei der Inbetriebsetzung der Freisprechanlage, einer Anweisung (K_SECUR) zur Sicherung der mobilen Endeinrichtung (MS) auslösen, die vom Übertragungsmodul (MT) an den Schalter (MSC) gesendet wird, und Einrichtungen (MAP) zur Weiterleitungsanforderung enthält, die selektiv die Übertragung einer Weiterleitungsanforderung (RQR_MS_ATP) vom Schalter (MSC) an das Heimat-Ortsregister (HLR) gewährleisten, um jeden möglichen an die mobile Endeinrichtung (MS) gesendeten Anruf an den persönlichen Telefonassistenten (ATP) weiterzuleiten.

7. Anlage nach Anspruch 6, **dadurch gekennzeichnet, dass** der persönliche Telefonassistent (ATP) physikalisch in die Freisprechanlage (KML) integriert ist.

8. Anlage nach einem der Ansprüche 6 und 7, **dadurch gekennzeichnet, dass** der persönliche Telefonassistent (ATP) außerdem mit einer Spracherkennungsfunktion ausgestattet ist.

9. Freisprechanlage (KML), die geeignet ist, eine in einem Telefonnetz (COMM) zwischen einem ausgehend von einem Anrufanschluss (EMT) einen Telefonanruf (APP) sendenden Anrufer und einem auf einem mit dieser Freisprechanlage (KML) ausgestatteten mobilen Zielanschluss (MS) angerufenen Fahrzeugführer herzustellende Telefonverbindung zu sichern, **dadurch gekennzeichnet, dass** sie einen persönlichen Telefonassistenten (ATP) umfasst, der mindestens enthält:
- eine Funktion der Aufzeichnung, zumindest auf eine Steuerung hin, einer ggf. vom Anrufer formulierten und für den mobilen Zielanschluss (MS) bestimmten Anrufmitteilung (MSG_APP);
- eine Funktion der automatischen Übermittlung an den mobilen Zielanschluss (MS), zumindest im Fall einer Aufzeichnung einer Anrufmitteilung (MSG_APP), einer ersten Auskunftsmitteilung (MSG_RG1), die die Möglichkeit des Abhörens der aufgezeichneten Anrufmitteilung (MSG_APP) anzeigt;
- eine Funktion der Wiedergabe an den mobilen Zielanschluss (MS), zumindest auf eine Steuerung hin, der vorher aufgezeichneten, vom Anrufer kommenden Anrufmitteilung (MSG_APP)
- eine Funktion der Aufzeichnung, zumindest auf eine Steuerung hin, einer vom Fahrer formulierten und für den Anrufanschluss (EMT) bestimmten Antwortmitteilung (MSG_REP);
- eine Funktion der automatischen Übermittlung an den Anrufanschluss (EMT), zumindest im Fall einer Aufzeichnung einer Antwortmitteilung (MSG_REP), einer zweiten Auskunftmitteilung (MSG_RG2), die dem Anrufer die Möglichkeit des Abhörens der aufgezeichneten Antwortmitteilung (MSG_REP) anzeigt; und
- eine Funktion der Wiedergabe an den Anrufanschluss (EMT), zumindest auf eine Steuerung hin, der vom Fahrer kommenden, vorher aufgezeichneten Antwortmitteilung (MSG_REP).
